# DEMANDE DE BREVET EUROPEEN

(11) **EP 1 547 890 A1**
(43) Date de publication de la demande: **29.06.2005**
(21) Numéro de dépôt: 04029636.0
(22) Date de dépôt: 15.12.2004
(51) Int. Cl.: B60T 13/567

(54) **Agencement pour la fixation à baionnette et le verrouillage d'un servomoteur d'assistance de freinage**

(30) Priorité: 24.12.2003 FR 0315502
(71) Demandeur: ROBERT BOSCH GmbH, 70442 Stuttgart (DE)
(72) Inventeur: Verbo, Ulysse, 08190 - Sant Cugat (ES); Maligne, Jean-Charles, 93300 Aubervilliers (FR); Richard, Philippe, 77500 - Chelles (FR)
(74) Mandataire: Hurwic, Aleksander Wiktor

(57) **Abrégé**

L'invention propose un agencement (10) pour la fixation d'un servomoteur (12) d'assistance de freinage d'orientation axiale (A) sur un tablier (14) de véhicule automobile, du type dans lequel une face arrière (16) du servomoteur (12) est destinée à être fixée sur une face avant (18) du tablier (14), du type qui comporte des premiers moyens (26) de montage à baïonnette interposés entre la face arrière (16) du servomoteur (12) et la face avant (18) du tablier (14) qui sont susceptibles d'être verrouillés en rotation.

## Description

L'invention concerne un agencement pour la fixation d'un servomoteur d'assistance de freinage d'orientation axiale sur un tablier de véhicule automobile.

L'invention concerne plus particulièrement un agencement pour la fixation d'un servomoteur d'assistance de freinage d'orientation axiale sur un tablier de véhicule automobile, du type dans lequel une face arrière du servomoteur est destinée à être fixée sur une face avant du tablier, et du type qui comporte des premiers moyens de montage à baïonnette interposés entre la face arrière du servomoteur et la face avant du tablier qui comportent :
- une platine de réception dont une face arrière est destinée à être fixée sur la face avant du tablier et dont une face avant porte au moins deux crochets, qui sont répartis angulairement autour de la direction axiale suivant un diamètre déterminé, et dont les parties actives sont tournées vers la direction axiale, et
- une plaque de fixation dont une face avant est destinée à être fixée à la face arrière du servomoteur, et qui comporte au moins deux tenons radiaux, qui s'étendent radialement à partir de la plaque de fixation suivant le diamètre déterminé, qui sont répartis angulairement autour de la direction axiale, et qui sont destinés, dans une position d'introduction de la plaque, à être insérés angulairement entre deux crochets consécutifs répartis angulairement d'une manière analogue aux tenons de la plaque et qui sont destinés, lorsque la plaque de fixation est pivotée d'un angle dans un sens déterminé autour de la position axiale pour atteindre une position de verrouillage, à être retenus chacun axialement par la partie active d'un crochet associé pour immobiliser la plaque de fixation par rapport à la platine suivant la direction axiale,
- des moyens élastiques, qui sont interposés entre la platine de réception et la plaque de fixation, qui sont destinés à solliciter axialement les tenons radiaux au contact des parties actives de crochets, et qui sont susceptibles d'être maintenus comprimés en position d'introduction de la plaque de fixation puis décomprimés par des moyens de maintien en compression et de décompression.

On connaît de nombreux exemples d'agencements pour la fixation d'un servomoteur d'assistance de freinage.

Selon une première conception conventionnelle, il est connu de proposer des agencements dans lesquels la face arrière du servomoteur comporte au moins deux goujons qui sont destinés à traverser le tablier du véhicule et à être boulonnés du côté du tablier qui est tourné vers l'intérieur de l'habitacle du véhicule.

Cette conception est particulièrement pénalisante en terme de rapidité de montage dans le cadre d'une production de grande série, car elle nécessite de passer par l'intérieur de l'habitacle pour réaliser la fixation du servomoteur, ce qui est typiquement réalisé par deux opérateurs, l'un maintenant le servomoteur et l'autre vissant les boulons du côté de l'habitacle.

De surcroît, l'opération de vissage doit être répétée autant de fois que le servomoteur comporte de goujons, ce qui la rend particulièrement fastidieuse.

Pour remédier à cet inconvénient on a proposé, selon une seconde conception connue, de fixer le servomoteur sur le tablier du véhicule par l'intermédiaire de moyens de montage à baïonnette.

De tels moyens de montage comportent typiquement des parties mâles, telles que des ergots portés par exemple par le servomoteur, qui sont destinées, après un verrouillage par rotation, à coopérer avec des parties femelles, telles que des crans portés par le tablier du véhicule. Ils comportent aussi des premiers moyens élastiques destinés à solliciter les parties mâles au contact des parties femelles.

De tels moyens de montage à baïonnette permettent de monter plus facilement le servomoteur en n'intervenant que d'un seul côté du tablier. En revanche, ils demeurent d'une mise en oeuvre peu aisée car l'opérateur en charge du montage doit préalablement comprimer les moyens élastiques, puis les maintenir comprimés tout en opérant le verrouillage des parties mâles au contact des parties femelles.

Par ailleurs ces moyens de montage à baïonnette peuvent, lorsqu'ils sont soumis aux vibrations du véhicule, être amenés à se déverrouiller inopinément.

Pour remédier à ces inconvénients, l'invention propose un agencement pour la fixation d'un servomoteur du type décrit précédemment, pour lequel la fixation n'oblige pas l'opérateur à maintenir comprimés les moyens élastiques, et dans lequel la fixation peut de surcroît être réalisée par un seul opérateur en une seule opération de montage, et peut être éventuellement être automatisée. L'agencement selon l'invention comporte avantageusement des moyens d'immobilisation en rotation du servomoteur pour éviter qu'il ne se déverrouille intempestivement.

Dans ce but, l'invention propose un agencement pour la fixation d'un servomoteur du type décrit précédemment, caractérisé en ce qu'il comporte une épingle amovible, qui est interposée sensiblement tangentiellement entre un bord d'un crochet de la platine et un bord d'une encoche radiale formée à la périphérie de la plaque de fixation pour immobiliser ladite plaque de fixation angulairement en rotation autour de la direction axiale dans le sens opposé au sens déterminé.

Selon d'autres caractéristiques de l'invention :
- l'agencement comporte des moyens d'immobilisation en rotation de la plaque de fixation dans le sens déterminé lorsqu'elle occupe sa position de verrouillage,
- la platine de réception comporte une plaque d'embase, comportant la face arrière de la platine, et un fût sensiblement cylindrique qui s'étend vers l'avant à partir de la plaque d'embase, qui reçoit la plaque de fixation, dont l'extrémité comporte la face avant porteuse des crochets, et dont la périphérie participe à la fixation de l'épingle,
- l'épingle est agencée le long du fût sensiblement suivant une direction longitudinale parallèle à la direction axiale et elle comporte au moins une première lame comportant une extrémité incurvée vers l'encoche dont un bord longitudinal prend appui contre le bord de l'encoche de la plaque de fixation et dont le bord longitudinal opposé prend appui contre le bord du crochet lorsque la plaque de fixation occupe sa position verrouillée,
- l'épingle est réalisée en un matériau élastique et elle présente sensiblement la forme d'un "V" constitué de la première lame et d'une seconde lame de longueur réduite, une extrémité de jonction des deux lames étant reçue dans un orifice de la plaque d'embase, une partie intermédiaire de la première lame et l'extrémité de la seconde lame étant reçues entre deux bords en vis à vis d'une fente d'orientation longitudinale conformée en "U" tournée vers le crochet portée par un doigt qui s'étend sensiblement radialement à partir de la périphérie du fût, l'épingle comportant des moyens d'immobilisation suivant la direction longitudinale par rapport au doigt et/ou à l'orifice de la plaque d'embase.
- les moyens d'immobilisation de l'épingle suivant la direction longitudinale comportent :
   - une aile qui s'étend le long de la première lame entre l'extrémité de jonction de l'épingle et l'extrémité incurvée de la première lame, dont un bord avant est reçu en butée contre la plaque d'embase à l'extérieur de l'orifice pour immobiliser l'épingle vers l'avant, et
   - un ergot, qui fait saillie au dos de la seconde lame à proximité de son extrémité, et qui prend appui contre une face avant du doigt, pour immobiliser l'épingle vers l'arrière.
- l'aile est d'une largeur sensiblement égale à celle de la lame pour fournir un moyen de préhension permettant de rapprocher les lames de l'épingle de manière à permettre son extraction et de libérer la plaque de fixation du servomoteur,
- les moyens élastiques comportent un ressort hélicoïdal qui est reçu dans un alésage du fût qui débouche dans la face avant de la platine de fixation et ils comportent une coupelle d'appui, qui est d'un diamètre correspondant sensiblement à celui dudit alésage du fût, et qui est interposée entre le ressort et la plaque de fixation du servomoteur pour, en position de verrouillage, solliciter axialement la plaque de fixation du servomoteur de manière à solliciter les tenons au contact des parties actives des crochets, les moyens de maintien en compression et de décompression étant destinés à maintenir comprimé ou à décomprimer axialement le ressort hélicoïdal,
- l'alésage du fût de la platine de réception comporte un tronçon arrière recevant le ressort hélicoïdal et un tronçon avant, d'un diamètre supérieur au tronçon arrière, débouchant dans la face avant de la platine de réception, et recevant la coupelle d'appui, qui sont délimités par une face d'épaulement,
- les moyens de maintien en compression et de décompression des moyens élastiques comportent des seconds moyens de montage à baïonnette interposés entre la coupelle et le tronçon avant de l'alésage du fût de la platine,
- les seconds moyens de montage à baïonnette comportent des pattes radiales de la coupelle d'appui, d'un encombrement radial sensiblement correspondant à celui du tronçon avant, qui sont susceptibles, dans une position de maintien en compression, d'être retenues axialement entre la face d'épaulement et des ergots radiaux de la platine de fixation qui s'étendent sensiblement dans le plan de sa face avant pour maintenir le ressort comprimé et qui sont susceptibles, dans une position de décompression et/ou dans une position de montage, de s'échapper desdits ergots pour libérer le ressort hélicoïdal,
- des moyens d'entraînement sont interposés entre la plaque de fixation et la coupelle pour accoupler les premiers et les seconds moyens de montage à baïonnette, en associant la position d'introduction du servomoteur à la position de maintien en compression des moyens élastiques et en associant la position de verrouillage du servomoteur à la position de décompression des moyens élastiques,
- les moyens d'entraînement comportent au moins deux doigts axiaux, répartis angulairement de manière régulière, qui s'étendent vers l'avant à partir de la face avant de la coupelle d'appui et qui sont destinés à être reçus dans des encoches pratiquées dans la plaque de fixation, dont un bord de chacune est destiné à pousser le doigt correspondant de la coupelle d'appui pour provoquer la rotation de la coupelle entre la position d'introduction du servomoteur associée à la position de maintien en compression des moyens élastiques et la position de verrouillage du servomoteur associée à la position de décompression des moyens élastiques,
- l'agencement comporte des moyens de butée axiale destinés à retenir la coupelle d'appui en position de décompression du ressort hélicoïdal, pour éviter que la coupelle ne s'échappe de l'alésage du fût en cas de déverrouillage intempestif des seconds moyens de montage à baïonnette,
- les moyens de butée de la coupelle d'appui comportent au moins deux bras axiaux, qui s'étendent à partir d'une face arrière de la coupelle d'appui, qui entourent le ressort hélicoïdal et qui sont reçus dans l'alésage du fût par l'intermédiaire de troisièmes moyens de montage à baïonnette de manière à être mobiles entre une première position angulaire associée au montage de la coupelle, dans laquelle une extrémité recourbée de chaque bras est insérée dans une rainure longitudinale qui s'étend vers l'arrière dans l'alésage du fût à partir de la face avant de la platine de réception, et une pluralité de positions angulaires dans laquelle l'extrémité recourbée de chaque bras est reçue dans une fenêtre traversant la paroi cylindrique du fût et communiquant avec la rainure longitudinale, ces positions angulaires comportant au moins :
   - une deuxième position angulaire associée au repos axial de la coupelle et à la position de maintien en compression du ressort hélicoïdal, dans laquelle la rotation de la coupelle conduit l'extrémité recourbée de chaque bras à être reçue contre un bord longitudinal de la fenêtre opposé à la rainure longitudinale,
   - une troisième position angulaire associée à la butée axiale de la coupelle et à la position de décompression du ressort hélicoïdal, dans laquelle, après une rotation en sens inverse de la coupelle, l'extrémité recourbée de chaque bras est reçue en butée contre une face transversale d'extrémité avant de la fenêtre, l'extrémité recourbée de chaque bras 84 parcourant une course de longueur déterminée dans la fenêtre correspondant sensiblement à l'allongement du ressort hélicoïdal entre sa position de maintien en compression et sa position de décompression,
- un bord longitudinal de la fenêtre, situé à proximité de la rainure longitudinale, est susceptible de former une butée angulaire pour l'extrémité recourbée de chaque bras de la coupelle d'appui dans la troisième position angulaire de la coupelle associée à la position de verrouillage de la plaque de fixation, pour former les moyens d'immobilisation en rotation de la plaque de fixation dans le sens déterminé,
- la plaque de fixation comporte au moins deux bossages de fixation, qui sont répartis angulairement de manière régulière sur un diamètre maximal inférieur au diamètre minimal selon lequel sont réparties les parties actives des crochets, qui sont d'une épaisseur supérieure à l'épaisseur des parties actives des crochets, et qui sont destinés à être traversés par des moyens axiaux de fixation du servomoteur sur la plaque, notamment des goujons permettant la fixation du servomoteur par des écrous sur la face arrière de la plaqu'e de fixation,
- la plaque de fixation et la coupelle d'appui comportent chacune un perçage central d'un diamètre au plus égal au diamètre intérieur du ressort hélicoïdal, pour permettre le passage d'une tige d'actionnement du servomoteur,
- les tenons radiaux de la plaque de fixation sont répartis angulairement de manière irrégulière et/ou au moins un tenon radial, correspondant à la partie active d'un crochet associé, s'étend suivant un secteur angulaire supérieur à celui d'un autre tenon radial pour former des moyens de détrompage de la position de la plaque de fixation sur la platine de réception.
- la coupelle d'appui comporte au moins un ergot axial, décalé angulairement par rapport aux doigts axiaux, qui est destiné à être reçu dans une encoche correspondante pratiquée dans la plaque de fixation, pour former des moyens de détrompage de la position de la plaque de fixation par rapport à la coupelle d'appui.

L'invention concerne aussi un procédé de montage d'un servomoteur d'assistance de freinage d'orientation axiale sur un tablier de véhicule automobile à l'aide d'un agencement du type décrit précédemment, caractérisé en ce que :
- au cours de deux étapes indépendantes, on assemble d'une part le servomoteur à la plaque de fixation, et d'autre part on monte le ressort et la coupelle d'appui dans la platine de réception,
- puis, dans une étape suivante, on présente le servomoteur muni de la plaque de fixation devant la platine de réception en agençant angulairement les tenons radiaux de la plaque de fixation entre les crochets de la platine de réception,
- puis, dans une étape suivante, on avance la plaque de fixation au contact de la platine de réception,
- puis, dans une dernière étape, on fait pivoter le servomoteur et la plaque de fixation de l'angle déterminé pour verrouiller la plaque de fixation et pour décompresser les moyens élastiques.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un agencement de fixation selon un étant antérieur de la technique.
- la figure 2 est une vue en perspective éclatée selon un deuxième mode de réalisation de l'invention représentant le servomoteur et sa plaque de fixation avant leur montage,
- la figure 3 est une vue en perspective éclatée selon le deuxième mode de réalisation de l'invention représentant la platine de réception, le ressort hélicoïdal et la coupelle d'appui avant leur montage,
- la figure 4 est une vue en perspective assemblée avant leur montage selon le deuxième mode de réalisation de l'invention représentant la platine de réception, le ressort hélicoïdal et la coupelle d'appui, la coupelle d'appui occupant une position intermédiaire non verrouillée de compression des moyens élastiques,
- la figure 5 est une vue en perspective assemblée avant leur montage selon le deuxième mode de réalisation de l'invention représentant la platine de réception, le ressort hélicoïdal et la coupelle d'appui, la coupelle d'appui occupant sa position de maintien en compression des moyens élastiques,
- la figure 6 est une vue en perspective selon le deuxième mode de réalisation de l'invention représentant la plaque de fixation et l'épingle dans une position d'approche de montage devant la platine de réception avec la coupelle d'appui occupant sa position de maintien des moyens élastiques,
- la figure 7 est une vue en perspective selon le deuxième mode de réalisation de l'invention représentant la plaque de fixation dans sa position d'introduction sur la platine de réception avec la coupelle d'appui occupant sa position de maintien des moyens élastiques et l'épingle en position d'approche de montage,
- la figure 8 est une vue en perspective selon le deuxième mode de réalisation de l'invention représentant la plaque de fixation dans sa position de verrouillage sur la platine de réception avec la coupelle d'appui occupant une position intermédiaire déverrouillée avec les moyens élastiques encore comprimés,
- la figure 9 est une vue en perspective selon le deuxième mode de réalisation de l'invention représentant la plaque de fixation dans sa position de verrouillage sur la platine de réception avec la coupelle d'appui occupant sa position de décompression des moyens élastiques et l'épingle immobilisant la plaque de fixation,
- la figure 10 est une vue de détail illustrant la fixation de l'épingle entre le disque de fixation et le crochet de la platine de réception.

Dans la description qui va suivre, des chiffres de référence identiques désignent des pièces identiques ou ayant des fonctions similaires.

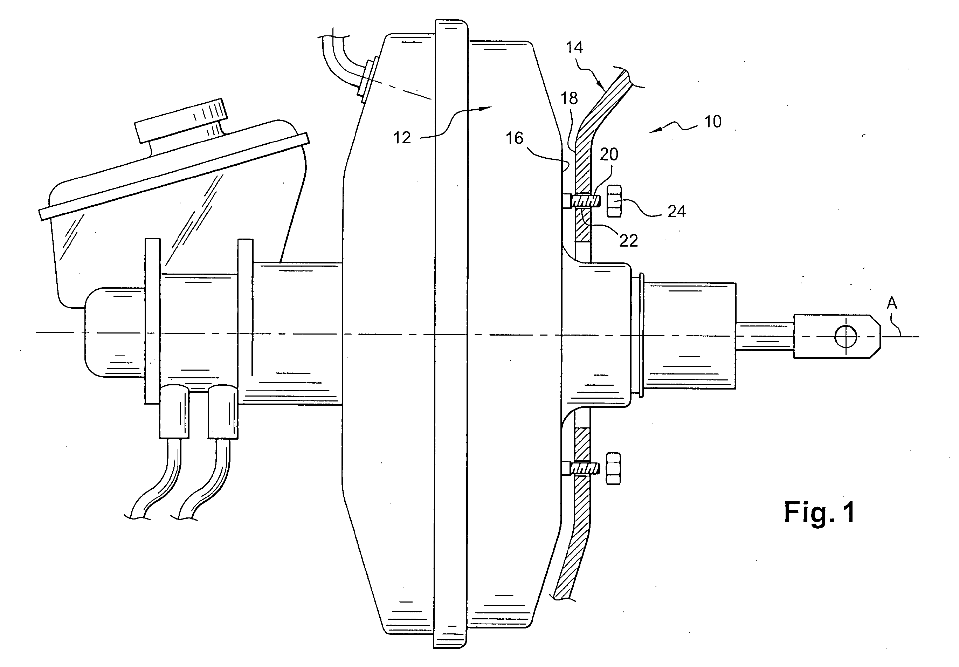

Par convention, les termes "avant" ou "arrière" désignent respectivement des éléments ou des positions orientés respectivement vers la gauche ou la droite des figures 1 à 10.

On a représenté à la figure 1 l'ensemble d'un agencement 10 conventionnel pour la fixation d'un servomoteur 12 d'assistance de freinage d'orientation axiale "A" sur un tablier 14 de véhicule automobile.

Dans un agencement 10 de ce type, une face arrière 16 du servomoteur 12 est destinée à être fixée sur une face avant 18 du tablier 14. De manière connue, la fixation du servomoteur 12 est réalisée par l'intermédiaire de goujons 20 qui s'étendent à partir de la face arrière 16 du servomoteur 12, qui traversent des perçages 22 du tablier 14 et qui reçoivent au dos du tablier 14, c'est à dire du côté de l'habitacle, des boulons 24 permettant la fixation du servomoteur 12:

Cet agencement est particulièrement pénalisant en terme de rapidité de montage dans le cadre d'une production de grande série, car elle nécessite de passer par l'intérieur de l'habitacle pour réaliser la fixation du servomoteur 12, ce qui est typiquement réalisé par deux opérateurs, l'un maintenant le servomoteur 12, et l'autre vissant les boulons 24 du côté de l'habitacle.

Pour remédier à cet inconvénient, on a proposé de fixer le servomoteur sur le tablier 18 du véhicule par l'intermédiaire de moyens de montage à baïonnette.

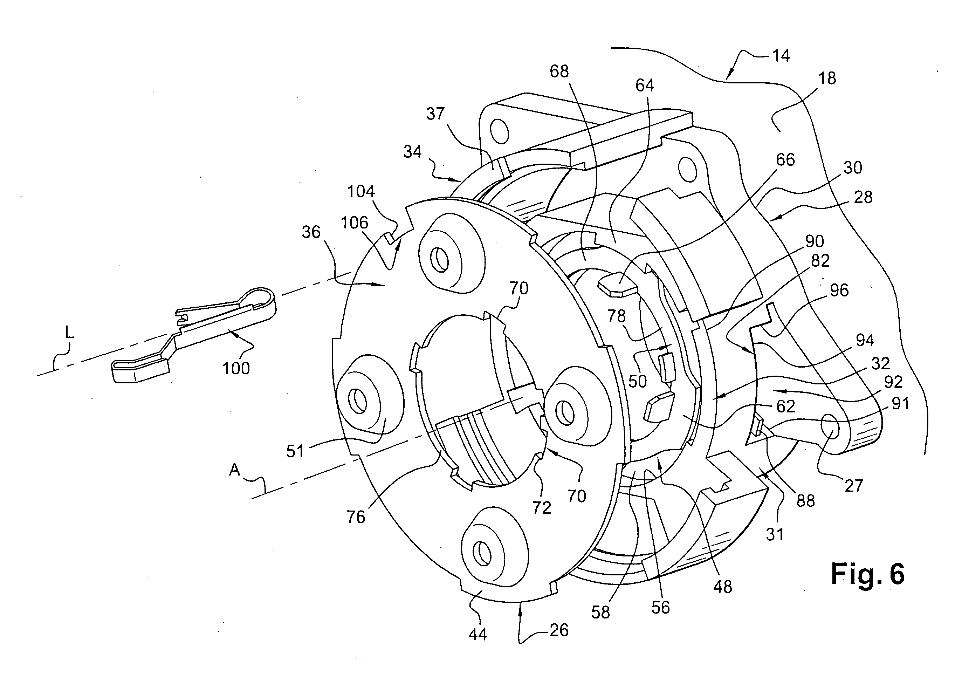

L'invention propose de manière connue de tels moyens 26 de montage à baïonnette. Comme l'illustrent les figures 6 à 9, l'agencement 10 selon l'invention comporte ainsi des premiers moyens 26 de montage à baïonnette interposés entre la face arrière 16 du servomoteur 12 et la face avant 18 du tablier 14.

D'une manière générale, le corps du servomoteur 12 peut comporter une partie des moyens de montage à baïonnette qui sont susceptibles de coopérer directement avec une autre partie complémentaire des moyens de montage à baïonnette qui sont portés directement par le tablier 14.

De tels moyens de montage comportent typiquement des moyens élastiques 46 destinés à solliciter l'assemblage à baïonnette pour en assurer la bonne tenue.

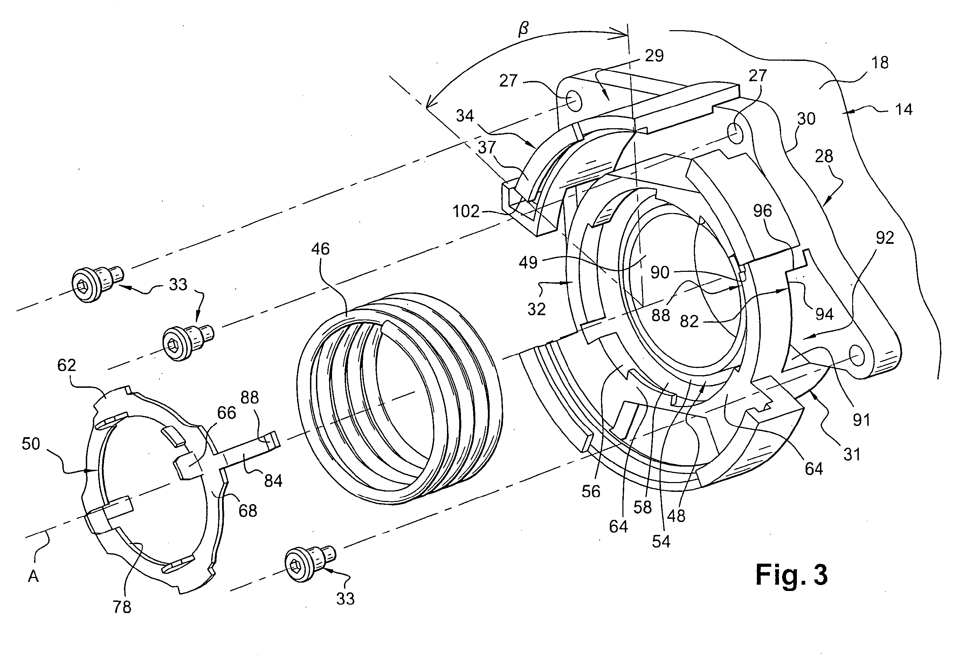

Afin de faciliter le montage du servomoteur, comme l'illustrent les figures et plus particulièrement les figures 3 à 9, l'agencement selon l'invention propose des moyens de maintien en compression et de décompression des moyens 46 élastiques.

De manière connue, les moyens 26 de montage à baïonnette sont interposés séparément entre le servomoteur 12 et le tablier 14.

Plus particulièrement, comme l'illustrent plus particulièrement les figures 3 à 9, les premiers moyens 26 de montage à baïonnette comportent de manière connue une platine 28 de réception dont une face arrière 30 est destinée à être fixée sur la face avant 18 du tablier 14 et dont une face avant 32 porte au moins deux crochets 34 qui sont répartis angulairement autour de la direction axiale "A". La platine 28 est par exemple fixée sur le tablier du véhicule par l'intermédiaire de vis 33 qui traversent des perçages 27 de la platine 28.

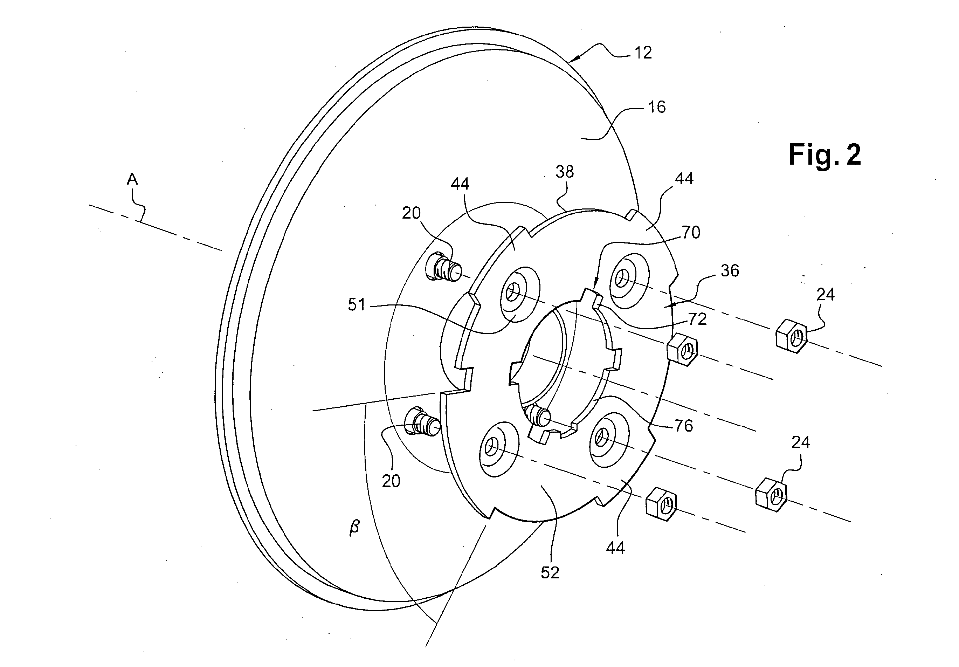

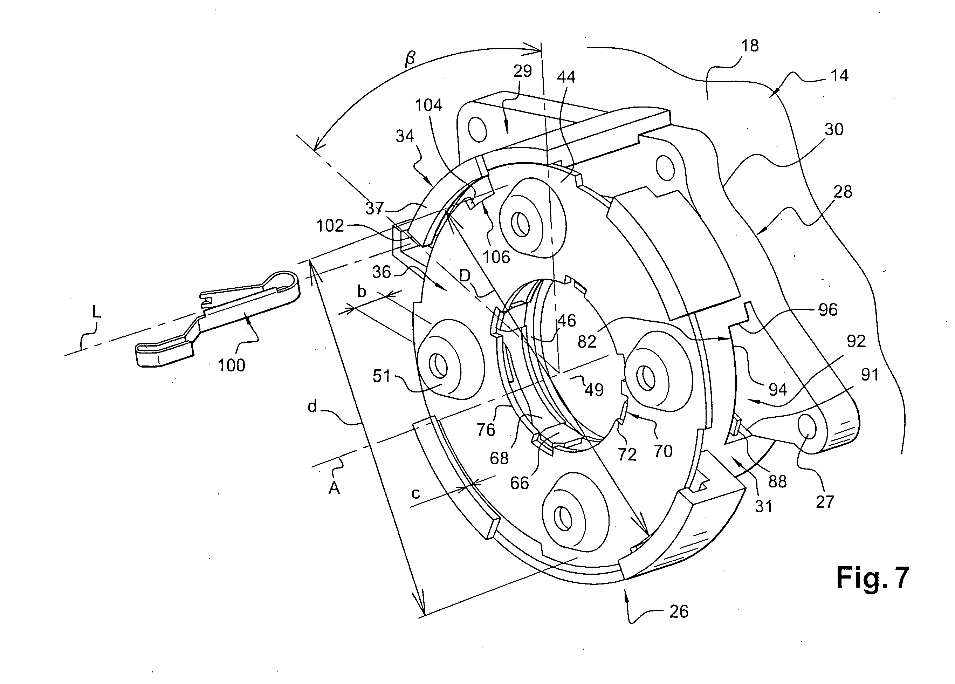

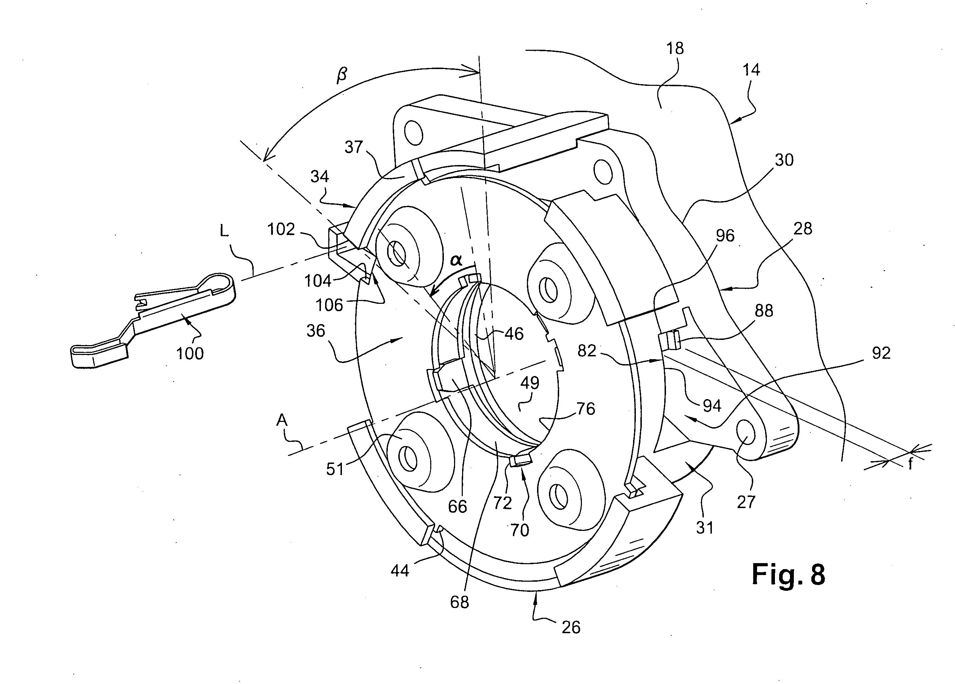

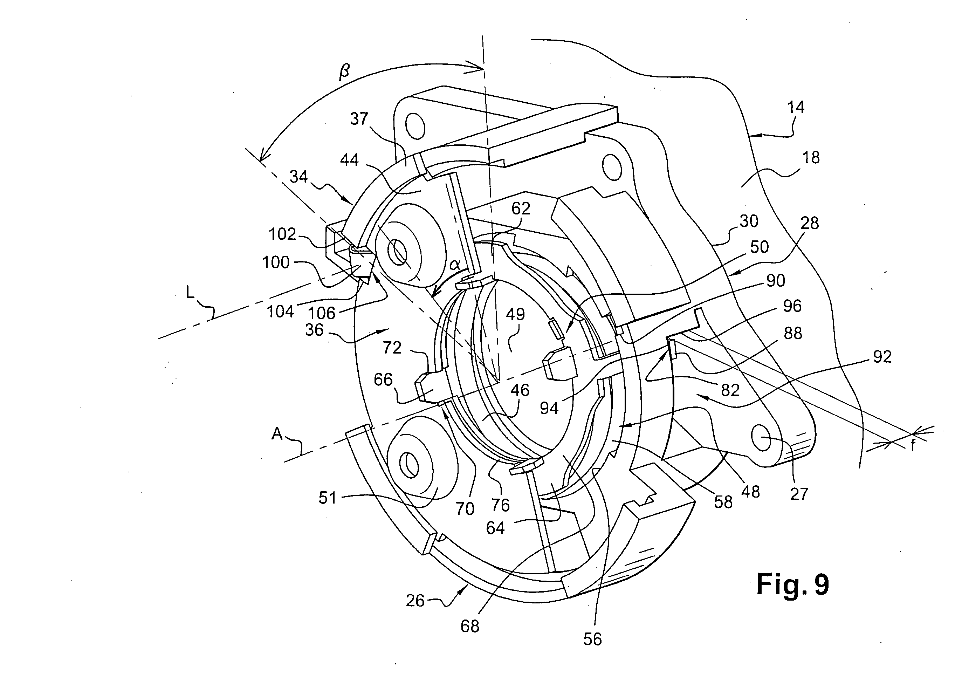

Par ailleurs, comme l'illustrent plus particulièrement les figures 2 et 6 à 9, les premiers moyens 26 de montage à baïonnette comportent aussi une plaque 36 de fixation dont une face avant 38 est destinée à être fixée à la face arrière 16 du servomoteur 12, et qui comporte au moins deux tenons radiaux 44 d'immobilisation axiale répartis angulairement autour de la direction axiale "A" et qui sont chacun destinés, dans une position d'introduction de la plaque 36 représentée aux figures 6 et 7, à être insérés chacun angulairement entre deux crochets 34 consécutifs répartis angulairement d'une manière analogue aux tenons 44 de la plaque 36 puis qui sont destinés, lorsque la plaque 36 de fixation est pivotée d'un angle "α" dans un sens déterminé autour de la position axiale "A" pour atteindre une position de verrouillage du servomoteur 12 représentée aux figures 8 et 9, à être retenus chacun axialement par la partie active 37 d'un crochet 34 associé pour immobiliser la plaque 36 de fixation par rapport à la platine 28 suivant la direction axiale "A". Les parties actives 37 des crochets sont tournées vers la direction axiale "A" et, plus particulièrement, la partie active 37 de chaque crochet 34 est constituée d'une plaque qui, à partir du corps d'orientation sensiblement parallèle à la direction axiale "A" de chaque crochet 34, s'étend radialement vers la direction axiale "A".

Dans le mode de réalisation préféré de l'invention la plaque 36 est sensiblement circulaire et les tenons 44 ainsi que les crochets 34 sont répartis suivant une même périphérie.

Dans cette configuration, comme l'illustrent les figures 2 et 7, la plaque 36 de fixation comporte au moins deux bossages 51 de fixation, qui sont répartis angulairement de manière régulière sur un diamètre "d" maximal qui est inférieur au diamètre "D" minimal selon lequel sont réparties les parties actives 37 des crochets 34, qui sont d'une épaisseur "b" supérieure à l'épaisseur "c" des parties actives 37 des crochets 34, et qui sont destinés, comme l'illustre la figure 2, à être traversés par des moyens axiaux de fixation du servomoteur 12 sur la plaque 36, notamment des goujons 20 permettant la fixation du servomoteur par des écrous 24 sur la face arrière 52 de la plaque 36 de fixation.

Le sens déterminé de verrouillage du servomoteur 12 correspond au sens anti-horaire comme l'illustrent les figures 7 et 8, mais il sera compris que cette disposition n'est pas limitative de l'invention et que le verrouillage du servomoteur 12 pourrait être obtenu, moyennant une disposition adaptée des crochets 34, en pivotant le servomoteur 12 dans le sens horaire.

Dans cette configuration, comme l'illustrent les figures 3 à 9, les moyens élastiques 46 sont interposés entre la platine 28 de réception et la plaque 36 de fixation, et ils sont destinés à solliciter axialement les tenons radiaux 44 au contact des crochets 34 en position de verrouillage. Les moyens élastiques 46 sont par ailleurs susceptibles d'être maintenus comprimés en position d'introduction de la plaque 36 de fixation puis décomprimés par les moyens de maintien en compression et de décompression qui seront décrit ultérieurement dans la suite de la présente description.

Cette configuration permet d'éviter d'avoir à maintenir en compression les moyens élastiques 46 pendant l'introduction de la plaque 36 de fixation sur la platine 28 de réception puis pendant la rotation de la plaque 36 dans le sens anti-horaire.

Conformément à l'invention, comme l'illustrent les figures 6 à 10, l'agencement 10 comporte une épingle amovible 100 qui, comme l'illustre plus particulièrement la figure 9, est interposée sensiblement tangentiellement entre un bord 102 d'un crochet 34 et un bord 104 d'une encoche 106 formée à la périphérie de la plaque 36 de fixation pour immobiliser ladite plaque 36 de fixation angulairement en rotation dans le sens horaire opposé au sens déterminé pour éviter le déverrouillage du servomoteur 12.

Par ailleurs, comme on le verra ultérieurement, l'agencement 10 comporte aussi des moyens d'immobilisation destinés à immobiliser en rotation la plaque 36 de fixation dans le sens déterminé lorsqu'elle occupe sa position de verrouillage.

De la sorte, une fois la plaque 36 de fixation verrouillée dans la platine 28, elle est immobilisée en rotation dans les deux sens de sorte qu'il lui est impossible de se déverrouiller.

Plus particulièrement, la platine 28 de réception comporte une plaque 29 d'embase, comportant la face arrière de la platine, et un fût 31 sensiblement cylindrique qui s'étend vers l'avant à partir de la plaque d'embase, qui reçoit la plaque 36 de fixation, dont l'extrémité comporte la face avant 32 porteuse des crochets 34, et dont la périphérie participe à la fixation de l'épingle 100.

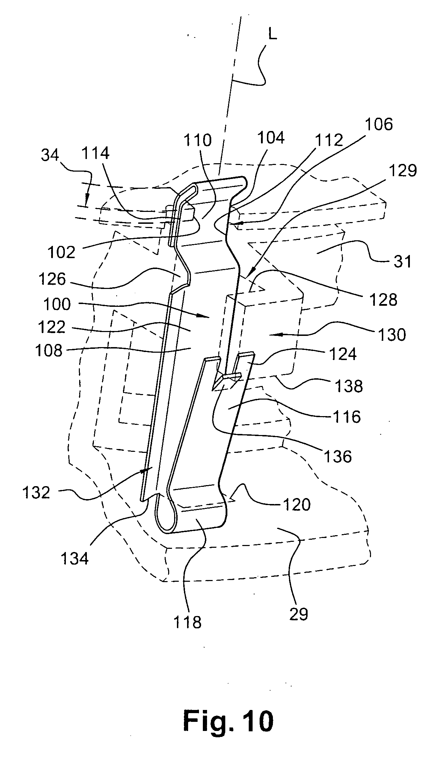

Comme l'illustrent les figures 9 et 10, l'épingle 100 est agencée le long du fût 31 sensiblement suivant une direction longitudinale "L" parallèle à la direction axiale. Cette direction "L" correspond aussi, comme on le verra ultérieurement dans la suite de la présente description, à la direction de montage de l'épingle 100, comme représenté aux figures 6 à 9.

Comme l'illustre la figure 10, l'épingle 100 comporte au moins une première lame 108 comportant une extrémité 110 incurvée vers l'encoche 106 dont un bord longitudinal 112 prend appui contre un bord 104 de l'encoche 106 de la plaque 36 de fixation et dont le bord 114 longitudinal opposé prend appui contre le bord 102 du crochet 34 lorsque la plaque 36 de fixation occupe sa position verrouillée.

Pour garantir une immobilisation satisfaisante de la première lame 108, l'épingle 100 est réalisée en un matériau élastique et elle présente sensiblement la forme d'un "V" constitué de la première lame 108 et d'une seconde lame 116 de longueur réduite.

Une extrémité 118 de jonction des deux lames 108 et 116 est reçue dans un orifice 120 de la plaque d'embase 29. Par ailleurs, pour immobiliser l'épingle 100 contre le fût 31, une partie intermédiaire 122 de la première lame 108 et l'extrémité 124 de la seconde lame 116 sont reçues entre deux bords 126, 128 en vis à vis d'une fente 129 d'orientation longitudinale conformée en "U" tournée vers le crochet 34 portée par un doigt 130 qui s'étend sensiblement radialement à partir de la périphérie du fût 31:

Enfin, l'épingle 100 comporte des moyens d'immobilisation suivant la direction longitudinale "L" par rapport au doigt 130 et/ou à l'orifice 120 de la plaque d'embase 29.

Plus particulièrement, les moyens d'immobilisation de l'épingle 100 suivant la direction longitudinale "L" comportent :
- une aile 132 qui s'étend le long de la première lame 108 entre l'extrémité 118 de jonction de l'épingle 100 et l'extrémité 110 incurvée de la première lame 108, dont un bord avant 134 est reçu en butée contre la plaque d'embase 29 à l'extérieur de l'orifice 120 pour immobiliser l'épingle 100 vers l'avant, et
- un ergot 136, qui fait saillie au dos de la seconde lame 116 à proximité de son extrémité 124, et qui prend appui contre une face avant 138 du doigt 130, pour immobiliser l'épingle 100 vers l'arrière.

De la sorte, une fois l'épingle 100 introduite entre l'encoche 106 et le crochet 34 d'arrière en avant comme représenté aux figures 8 et 9, celle-ci est immobilisée suivant la direction longitudinale "L" entre les bords 126, 128 de la fente 129 du doigt 130 par encliquetage de l'ergot 136 contre la face avant 138 du doigt 130.

Pour pouvoir démonter l'épingle 100, l'aile 132 est d'une largeur sensiblement égale à celle de la lame 108. De la sorte, l'aile 132 fournit un moyen de préhension permettant de rapprocher les lames 108 et 116 de l'épingle 100, ce qui permet son extraction hors de la fente 129 du doigt 130 et ce qui permet de déverrouiller la plaque 36 de fixation du servomoteur 12.

Dans tous les modes de réalisation de l'invention, comme représenté aux figures figure 3 à 9, les moyens élastiques 46 comportent un ressort hélicoïdal 46 qui est reçu dans un alésage 48 du fût 31 qui débouche dans la face avant 32 de la platine 28 de fixation.

Le ressort 46 peut notamment être centré sur une portée de centrage 49 qui est agencée dans l'alésage 48, mais cette disposition n'est pas limitative de l'invention.

La réalisation des moyens élastiques 46 sous la forme d'un ressort hélicoïdal n'est évidemment pas limitative de l'invention, et les moyens élastiques pourraient comporter tout autre type de moyens élastiques, notamment une pluralité de ressorts à lame interposés par exemple entre la face avant 32 de la platine 28 de réception et la plaque 36 de fixation.

Les moyens élastiques 46 comportent aussi une coupelle 50 d'appui, qui est d'un diamètre correspondant sensiblement à celui dudit alésage 48 du fût 31, et qui est interposée entre le ressort 46 et la plaque de fixation 36 du servomoteur 12 pour, en position de verrouillage, solliciter axialement la plaque 36 de fixation du servomoteur 12 de manière à solliciter les tenons 44 au contact des parties actives 37 des crochets 34, les moyens de maintien en compression étant destinés à maintenir comprimé ou à décomprimer axialement le ressort hélicoïdal 46.

Plus particulièrement, l'alésage 48 de la platine 28 de réception comporte un tronçon arrière 54 recevant le ressort hélicoïdal 46 et il comporte aussi un tronçon avant 56, qui est d'un diamètre supérieur au tronçon arrière 54, qui débouche dans la face avant 32 de la platine 28 de réception, et qui reçoit la coupelle 50 d'appui. Les tronçons arrière 54 et avant 56 sont délimités par une face d'épaulement 58.

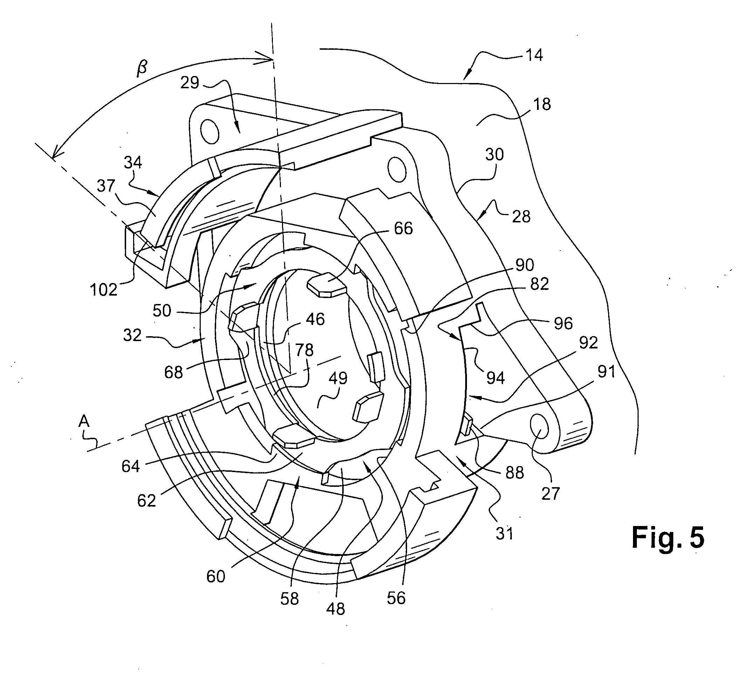

Dans cette configuration, les moyens de maintien en compression et de décompression des moyens élastiques 46 comportent des seconds moyens 60 de montage à baïonnette, représentés par exemple à la figure 5, qui sont interposés entre la coupelle 50 et le tronçon avant 56 de l'alésage 48 de la platine 28.

Plus particulièrement, comme l'illustrent les figures 3 à 5, les seconds moyens 60 de montage à baïonnette comportent des pattes radiales 62 de la coupelle 50 d'appui, d'un encombrement radial sensiblement correspondant à celui du tronçon avant 56, qui sont susceptibles, dans une position de maintien en compression, d'être retenues axialement entre la face d'épaulement 58 et des ergots radiaux 64 de la platine 28 qui s'étendent sensiblement dans le plan de sa face avant 32 pour maintenir le ressort 46 comprimé, et qui sont susceptibles, dans une position de décompression, de s'échapper desdits ergots 64 pour libérer le ressort 46 hélicoïdal.

Avantageusement, ces seconds moyens 60 de montage à baïonnette sont commandés par les premiers moyens 26 de montage à baïonnette, de manière à permettre un montage du servomoteur 12 en une seule opération effectuée par un seul opérateur.

A cet effet, des moyens d'entraînement sont interposés entre la plaque 36 de fixation et la coupelle 50 pour accoupler les premiers moyens 26 et les seconds moyens 60 de montage à baïonnette, en associant la position d'introduction du servomoteur 12 à la position de maintien en compression des moyens 46 élastiques, comme représenté aux figures 5 à 7, et en associant la position de verrouillage du servomoteur 12 ou une position de montage des moyens élastiques à la position de décompression des moyens élastiques 46, comme représenté aux figures 8 et 9.

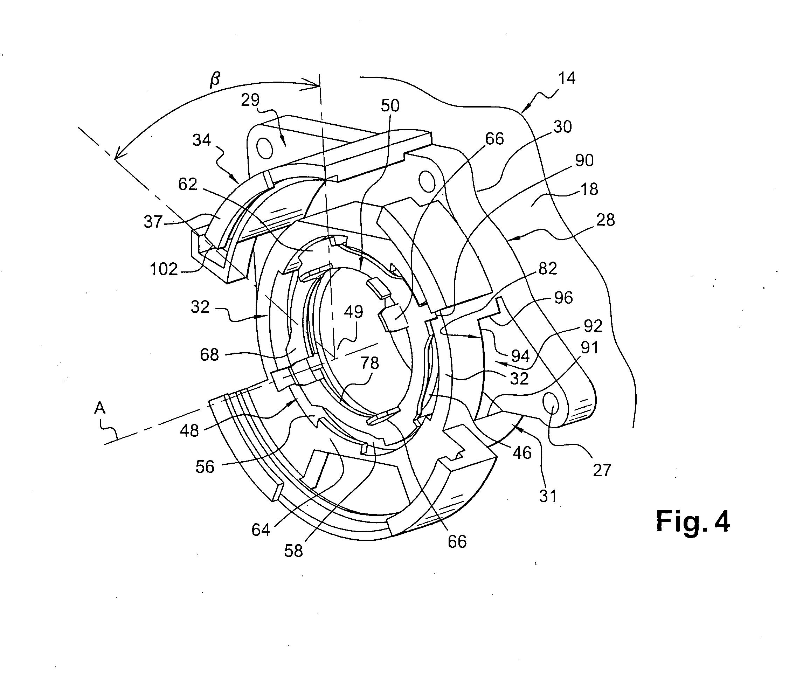

Plus particulièrement, comme l'illustrent les figures 4 à 9, les moyens d'entraînement comportent au moins deux doigts 66 axiaux, répartis angulairement de manière régulière, qui s'étendent vers l'avant à partir de la face avant 68 de la coupelle 50 d'appui et qui sont destinés à être reçus dans des encoches 70 pratiquées dans la plaque 36 de fixation comme représenté aux figures 7 à 9. Un bord 72 de chaque encoche 70 est destiné à pousser le doigt 66 correspondant de la coupelle 50 d'appui pour provoquer la rotation de la coupelle 50 entre la position d'introduction du servomoteur 12 associée à la position de maintien en compression du ressort 46 et la position de verrouillage du servomoteur 12 associée à la position de décompression du ressort 46.

L'agencement comporte aussi avantageusement des moyens 82 de butée axiale destinés à retenir la coupelle 50 d'appui en position de décompression du ressort 46 hélicoïdal, pour éviter que la coupelle 50 ne s'échappe de l'alésage 48 du fût 31 en cas de déverrouillage intempestif des seconds moyens 60 de montage à baïonnette.

Plus particulièrement, ces moyens 82 de butée de la coupelle 50 d'appui comportent au moins deux bras 84 axiaux, qui s'étendent à partir d'une face arrière 86 de la coupelle 50 d'appui, qui entourent le ressort hélicoïdal 46 et qui sont reçus dans l'alésage 48 du fût 31 par l'intermédiaire de troisièmes moyens de montage à baïonnette de manière à être mobiles entre :
- une position angulaire de montage de la coupelle 50, représentée à la figure 4, dans laquelle une extrémité 88 recourbée de chaque bras 84 est insérée dans une rainure longitudinale 90 qui s'étend vers l'arrière dans l'alésage 48 du fût à partir de la face avant 32 de la platine 28 de réception,
- une pluralité de positions angulaires dans laquelle l'extrémité 88 recourbée de chaque bras 84 est reçue dans une fenêtre 92 traversant la paroi cylindrique du fût 31 et communiquant avec la rainure 90 longitudinale, ces positions angulaires comportant au moins :
   - une deuxième position angulaire associée au repos axial de la coupelle 50 et à la position de maintien en compression du ressort hélicoïdal 46, dans laquelle la rotation de la coupelle 50 conduit l'extrémité 88 recourbée de chaque bras 84 à être reçue contre un bord 91 longitudinal de la fenêtre 92 opposé à la rainure 90 longitudinale,
   - une troisième position angulaire associée à la butée axiale de la coupelle 50 et à la position de décompression du ressort hélicoïdal 46, dans laquelle, après une rotation en sens inverse de la coupelle 50, l'extrémité recourbée 88 de chaque bras 84 est reçue en butée contre une face 94 transversale d'extrémité avant de la fenêtre 92, l'extrémité 88 recourbée de chaque bras 84 parcourant une course de longueur "f" déterminée dans la fenêtre correspondant sensiblement à l'allongement du ressort hélicoïdal 46 entre sa position de maintien en compression et sa position de décompression, comme représenté aux figure 8 et 9.

Il sera compris que la dimension longitudinale de la fenêtre 92 est au moins égale à la longueur de la course "f" des extrémités 88 des bras 84 lors de la décompression du ressort 46.

Ainsi, les extrémités 88 des bras 84 de la coupelle 50 permettent la retenue partielle du ressort 46 comprimé en cas de mauvaise manipulation avant le montage définitif du servomoteur 12.

Avantageusement, un bord longitudinal 96 de la fenêtre 92, situé à proximité de la rainure longitudinale 90, est susceptible de former une butée angulaire pour l'extrémité 84 recourbée de chaque bras de la coupelle 50 d'appui dans la troisième position angulaire de la coupelle 50 associée à la position de verrouillage de la plaque 36 de fixation, pour former les moyens d'immobilisation en rotation de la plaque 36 de fixation dans le sens déterminé.

De cette manière, le servomoteur 12 est immobilisé en rotation dans un sens par l'épingle 100 et dans l'autre par le bord 96 de butée de la fenêtre 92, ce qui permet d'éviter qu'il ne se déverrouille inopinément.

On remarquera enfin, comme l'illustrent notamment les figures 2 et 7, que la plaque 36 de fixation et la coupelle 50 d'appui comportent chacune un perçage central 76, 78 d'un diamètre au plus égal au diamètre intérieur du ressort 46 hélicoïdal pour permettre le passage d'une queue du servomoteur, queue recevant notamment en coulissement une tige d'actionnement du servomoteur 12.

Un autre avantage de l'invention est que l'agencement 10 comporte des moyens de détrompage pour le montage de la plaque 36 de fixation et pour le montage de la coupelle 50.

En effet, comme l'illustrent les figures 2 à 9, les tenons radiaux 44 de la plaque 36 de fixation sont répartis angulairement de manière irrégulière et/ou au moins un tenon 44 radial, correspondant à la partie active d'un crochet 34 associé, s'étend suivant un secteur angulaire "β" supérieur à celui d'un autre tenon radial 44 pour former des moyens de détrompage de la position de la plaque 36 de fixation sur la platine 28 de réception. De cette manière, la plaque 36 de fixation ne peut être montée que d'une manière unique sur la platine 28 de réception.

Dans le mode de réalisation préféré de l'invention, et de manière non limitative de celle-ci, on remarquera que le tenon 44 de secteur angulaire "β" est accolé à l'encoche 106, ceci afin de faciliter son repérage lors du montage.

Dans cette configuration, le montage du servomoteur 12 peut être effectué selon un procédé de montage qui a été représenté aux figures 2 à 9.

Au cours de deux étapes indépendantes, on assemble d'une part le servomoteur 12 à la plaque 36 de fixation comme représenté à la figure 2, et d'autre part on monte le ressort 46 et la coupelle d'appui 50 dans la platine 28 de réception, comme représenté aux figures 3 à 5.

Puis, dans une étape suivante, on présente le servomoteur 12 muni de la plaque de fixation 36 devant la platine 28 de réception, comme représenté à la figure 6, en agençant angulairement les tenons 44 entre les crochets 34.

Puis, dans une étape suivante, on avance la plaque 36 de fixation au contact de la platine 28 de réception, comme représenté à la figure 7.

Enfin dans une dernière étape, on fait pivoter le servomoteur 12 et la plaque de fixation 36 de l'angle "α" déterminé pour verrouiller la plaque 36 de fixation comme représenté à la figure 8.

Le ressort 46 se décomprime, et on introduit alors l'épingle 100, comme représenté à la figure 9.

L'invention propose donc un agencement permettant de simplifier considérablement les opérations de fixation d'un servomoteur 12 et par conséquent de réduire les coûts de montage d'un véhicule comportant un tel servomoteur. Cet agencement permet aussi de simplifier considérablement les opérations de remplacement d'un tel servomoteur en cas de défaillance. Enfin, outre la simplicité de montage du servomoteur 12, un tel agencement 10 permet d'effectuer le montage du servomoteur 12 sans effectuer d'opération du côté de l'habitacle du véhicule.

## Revendications

1. Agencement (10) pour la fixation d'un servomoteur (12) d'assistance de freinage d'orientation axiale (A) sur un tablier (14) de véhicule automobile, du type dans lequel une face arrière (16) du servomoteur (12) est destinée à être fixée sur une face avant (18) du tablier (14), et du type qui comporte des premiers moyens (26) de montage à baïonnette interposés entre la face arrière (16) du servomoteur (12) et la face avant (18) du tablier (14) qui comportent :
- une platine (28) de réception dont une face arrière (30) est destinée à être fixée sur la face avant (18) du tablier (14) et dont une face avant (32) porte au moins deux crochets (34), qui sont répartis angulairement autour de la direction axiale (A) suivant un diamètre (D) déterminé, et dont les parties actives (37) sont tournées vers la direction axiale (A), et
- une plaque (36) de fixation dont une face avant (38) est destinée à être fixée à la face arrière (16) du servomoteur (12), et qui comporte au moins deux tenons radiaux (44), qui s'étendent radialement à partir de la plaque (36) de fixation suivant le diamètre (D) déterminé, qui sont répartis angulairement autour de la direction axiale (A), et qui sont destinés, dans une position d'introduction de la plaque (36), à être insérés angulairement entre deux crochets (34) consécutifs répartis angulairement d'une manière analogue aux tenons (44) de la plaque (36) et qui sont destinés, lorsque la plaque (36) de fixation est pivotée d'un angle (α) dans un sens déterminé autour de la position axiale (A) pour atteindre une position de verrouillage, à être retenus chacun axialement par la partie active (37) d'un crochet (34) associé pour immobiliser la plaque (36) de fixation par rapport à la platine (28) suivant la direction axiale (A),
- des moyens élastiques (46), qui sont interposés entre la platine (28) de réception et la plaque (36) de fixation, qui sont destinés à solliciter axialement les tenons (44) radiaux au contact des parties actives de crochets, et qui sont susceptibles d'être maintenus comprimés en position d'introduction de la plaque (36) de fixation puis décomprimés par des moyens de maintien en compression et de décompression,
**caractérisé en ce qu'**il comporte une épingle amovible, qui est interposée sensiblement tangentiellement entre un bord (102) d'un crochet (34) de la platine et un bord (104) d'une encoche (106) radiale formée à la périphérie de la plaque (36) de fixation pour immobiliser ladite plaque (36) de fixation angulairement en rotation autour de la direction axiale (A) dans le sens opposé au sens déterminé pour éviter le déverrouillage du servomoteur (12).

2. Agencement (10) selon la revendication précédente, **caractérisé en ce qu'**il comporte des moyens (88, 96) d'immobilisation en rotation de la plaque (36) de fixation dans le sens déterminé lorsqu'elle occupe sa position de verrouillage.

3. Agencement (10) selon l'une des revendications précédente, **caractérisé en ce que** la platine (28) de réception comporte une plaque (29) d'embase, comportant la face arrière (30) de la platine (28), et un fût (31) sensiblement cylindrique qui s'étend vers l'avant à partir de la plaque (29) d'embase, qui reçoit la plaque (36) de fixation, dont l'extrémité comporte la face avant (32)porteuse des crochets (34), et dont la périphérie participe à la fixation de l'épingle (100).

4. Agencement (10) selon la revendication précédente, **caractérisé en ce que** l'épingle (100) est agencée le long du fût (31) sensiblement suivant une direction (L) longitudinale parallèle à la direction axiale (A) et **en ce qu'**elle comporte au moins une première lame (108) comportant une extrémité (110) incurvée vers l'encoche dont un bord (112) longitudinal prend appui contre le bord (104) de l'encoche (106) de la plaque (36) de fixation et dont le bord (114) longitudinal opposé prend appui contre le bord (102) du crochet (34) lorsque la plaque (36) de fixation occupe sa position verrouillée.

5. Agencement selon la revendication précédente, **caractérisé en ce que** l'épingle est réalisée en un matériau élastique et **en ce qu'**elle présente sensiblement la forme d'un "V" constitué de la première lame et d'une seconde lame de longueur réduite, une extrémité de jonction des deux lames étant reçue dans un orifice de la plaque d'embase, une partie intermédiaire de la première lame et l'extrémité de la seconde lame étant reçues entre deux bords en vis à vis d'une fente d'orientation longitudinale conformée en "U" tournée vers le crochet portée par un doigt qui s'étend sensiblement radialement à partir de la périphérie du fût, l'épingle comportant des moyens d'immobilisation suivant la direction longitudinale par rapport au doigt et/ou à l'orifice de la plaque d'embase.

6. Agencement selon la revendication précédente, **caractérisé en ce que** les moyens d'immobilisation de l'épingle suivant la direction longitudinale comportent :
- une aile qui s'étend le long de la première lame entre l'extrémité de jonction de l'épingle et l'extrémité incurvée de la première lame, dont un bord avant est reçu en butée contre la plaque d'embase à l'extérieur de l'orifice pour immobiliser l'épingle vers l'avant, et
- un ergot, qui fait saillie au dos de la seconde lame à proximité de son extrémité, et qui prend appui contre une face avant du doigt, pour immobiliser l'épingle vers l'arrière.

7. Agencement selon la revendication précédente, **caractérisé en ce que** l'aile est d'une largeur sensiblement égale à celle de la lame pour fournir un moyen de préhension permettant de rapprocher les lames de l'épingle de manière à permettre son extraction et de libérer la plaque de fixation du servofrein.

8. Agencement (10) selon l'une quelconque des revendications 3 à 7, **caractérisé en ce que** les moyens élastiques (46) comportent un ressort hélicoïdal (46) qui est reçu dans un alésage (48) du fût qui débouche dans la face avant (32) de la platine (28) de fixation et **en ce qu'**ils comportent une coupelle (50) d'appui, qui est d'un diamètre correspondant sensiblement à celui dudit alésage (48) du fût, et qui est interposée entre le ressort (46) et la plaque (36) de fixation du servomoteur (12) pour, en position de verrouillage, solliciter axialement la plaque de fixation (36) du servomoteur (12) de manière à solliciter les tenons (44) au contact des parties actives des crochets (34), les moyens de maintien en compression et de décompression étant destinés à maintenir comprimé ou à décomprimer axialement le ressort hélicoïdal (46).

9. Agencement (10) selon la revendication précédente, **caractérisé en ce que** :
- l'alésage (48) du fût de la platine (28) de réception comporte un tronçon arrière (54) recevant le ressort (46) hélicoïdal et un tronçon avant (56), d'un diamètre supérieur au tronçon arrière (54), débouchant dans la face avant (32) de la platine (28) de réception, et recevant la coupelle (50) d'appui, qui sont délimités par une face d'épaulement (58),
- les moyens de maintien en compression et de décompression des moyens élastiques (46) comportent des seconds moyens (60) de montage à baïonnette interposés entre la coupelle (50) et le tronçon avant (56) de l'alésage (48) du fût de la platine (12).

10. Agencement (10) selon la revendication précédente, **caractérisé en ce que** les seconds moyens (60) de montage à baïonnette comportent des pattes radiales (62) de la coupelle (50) d'appui, d'un encombrement radial sensiblement correspondant à celui du tronçon avant (56), qui sont susceptibles, dans une position de maintien en compression, d'être retenues axialement entre la face d'épaulement (58) et des ergots radiaux (64) de la platine (28) de fixation qui s'étendent sensiblement dans le plan de sa face avant (32) pour maintenir le ressort comprimé et qui sont susceptibles, dans une position de décompression et/ou dans une position de montage, de s'échapper desdits ergots (64) pour libérer le ressort (46) hélicoïdal.

11. Agencement (10) selon la revendication précédente, **caractérisé en ce que** des moyens d'entraînement sont interposés entre la plaque (36) de fixation et la coupelle (50) pour accoupler les premiers et les seconds moyens (26, 60) de montage à baïonnette, en associant la position d'introduction du servomoteur (12) à la position de maintien en compression des moyens élastiques (46) et en associant la position de verrouillage du servomoteur (12) à la position de décompression des moyens élastiques.

12. Agencement (10) selon la revendication précédente, **caractérisé en ce que** les moyens d'entraînement comportent au moins deux doigts (66) axiaux, répartis angulairement de manière régulière, qui s'étendent vers l'avant à partir de la face avant (68) de la coupelle (50) d'appui et qui sont destinés à être reçus dans des encoches (70) pratiquées dans la plaque (36) de fixation, dont un bord (72) de chacune est destiné à pousser le doigt (66) correspondant de la coupelle (50) d'appui pour provoquer la rotation de la coupelle (50) entre la position d'introduction du servomoteur (12) associée à la position de maintien en compression des moyens élastiques (46) et la position de verrouillage du servomoteur (12) associée à la position de décompression des moyens élastiques (46).

13. Agencement selon l'une quelconque des revendications 8 à 12, **caractérisé en ce qu'**il comporte des moyens de butée axiale destinés à retenir la coupelle d'appui en position de décompression du ressort hélicoïdal, pour éviter que la coupelle ne s'échappe de l'alésage du fût en cas de déverrouillage intempestif des seconds moyens (60) de montage à baïonnette.

14. Agencement selon la revendication précédente, **caractérisé en ce que** les moyens de butée de la coupelle d'appui comportent au moins deux bras axiaux, qui s'étendent à partir d'une face arrière de la coupelle d'appui, qui entourent le ressort hélicoïdal et qui sont reçus dans l'alésage du fût par l'intermédiaire de troisièmes moyens de montage à baïonnette de manière à être mobiles entre :
- une première position angulaire associée au montage de la coupelle, dans laquelle une extrémité recourbée de chaque bras est insérée dans une rainure longitudinale qui s'étend vers l'arrière dans l'alésage du fût à partir de la face avant de la platine de réception,
- une pluralité de positions angulaires dans laquelle l'extrémité recourbée de chaque bras est reçue dans une fenêtre traversant la paroi cylindrique du fût et communiquant avec la rainure longitudinale, ces positions angulaires comportant au moins :
• une deuxième position angulaire associée au repos axial de la coupelle et à la position de maintien en compression du ressort hélicoïdal, dans laquelle la rotation de la coupelle conduit l'extrémité recourbée de chaque bras à être reçue contre un bord longitudinal de la fenêtre opposé à la rainure longitudinale,
• une troisième position angulaire associée à la butée axiale de la coupelle et à la position de décompression du ressort hélicoïdal, dans laquelle, après une rotation en sens inverse de la coupelle, l'extrémité recourbée de chaque bras est reçue en butée contre une face transversale d'extrémité avant de la fenêtre, l'extrémité recourbée de chaque bras 84 parcourant une course de longueur déterminée dans la fenêtre correspondant sensiblement à l'allongement du ressort hélicoïdal entre sa position de maintien en compression et sa position de décompression.

15. Agencement selon la revendication précédente prise en combinaison avec la revendication 2, **caractérisé en ce qu'**un bord longitudinal de la fenêtre, situé à proximité de la rainure longitudinale, est susceptible de former une butée angulaire pour l'extrémité recourbée de chaque bras de la coupelle d'appui dans la troisième position angulaire de la coupelle associée à la position de verrouillage de la plaque de fixation, pour former les moyens d'immobilisation en rotation de la plaque de fixation dans le sens déterminé.

16. Agencement (10) selon l'une quelconque des revendications 1 à 15, **caractérisé en ce que** la plaque (36) de fixation comporte au moins deux bossages (51) de fixation, qui sont répartis angulairement de manière régulière sur un diamètre (d) maximal inférieur au diamètre (D) minimal selon lequel sont réparties les parties actives (37) des crochets (34), qui sont d'une épaisseur (b) supérieure à l'épaisseur (c) des parties actives (37) des crochets (34), et qui sont destinés à être traversés par des moyens axiaux de fixation du servomoteur (12) sur la plaque (36), notamment des goujons (20) permettant la fixation du servomoteur par des écrous (24) sur la face arrière (52) de la plaque (36) de fixation.

17. Agencement (10) selon l'une quelconque des revendications 8 à 16, **caractérisé en ce que** la plaque (36) de fixation et la coupelle (50) d'appui comportent chacune un perçage central (76, 78) d'un diamètre au plus égal au diamètre intérieur du ressort (46) hélicoïdal, pour permettre le passage d'une tige d'actionnement du servomoteur (12).

18. Agencement selon l'une quelconque des revendications 1 à 17, **caractérisé en ce que** les tenons radiaux (44) de la plaque de fixation sont répartis angulairement de manière irrégulière et/ou **en ce que** au moins un tenon radial, correspondant à la partie active d'un crochet associé, s'étend suivant un secteur angulaire supérieur à celui d'un autre tenon radial pour former des moyens de détrompage de la position de la plaque de fixation sur la platine de réception.

19. Procédé de montage d'un servomoteur (12) d'assistance de freinage d'orientation axiale sur un tablier (14) de véhicule automobile à l'aide d'un agencement (10) selon l'une quelconque des revendications 8 à 18, **caractérisé en ce que** :
- au cours de deux étapes indépendantes, on assemble d'une part le servomoteur (12) à la plaque (36) de fixation, et d'autre part on monte le ressort (46) et la coupelle d'appui (50) dans la platine (28) de réception,
- puis, dans une étape suivante, on présente le servomoteur (12) muni de la plaque de fixation (36) devant la platine (28) de réception en agençant angulairement les tenons radiaux de la plaque de fixation entre les crochets de la platine de réception,
- puis, dans une étape suivante, on avance la plaque de fixation au contact de la platine de réception,
- puis, dans une dernière étape, on fait pivoter le servomoteur (12) et la plaque de fixation (36) de l'angle (α) déterminé pour verrouiller la plaque (36) de fixation et pour décompresser les moyens élastiques (46).
